# EUROPÄISCHE PATENTANMELDUNG

(11) **EP 4 552 459 A1**
(43) Veröffentlichungstag der Anmeldung: **14.05.2025**
(21) Anmeldenummer: 24203488.2
(22) Anmeldetag: 30.09.2024
(51) Int. Cl.: A01B 79/00, G06Q 50/02

(54) **PLANUNGSPORTAL ZUR PLANUNG EINES LANDWIRTSCHAFTLICHEN EINSATZES**

(30) Priorität: 08.11.2023 DE 102023130887
(71) Anmelder: CLAAS KGaA mbH, 33428 Harsewinkel (DE)
(72) Erfinder: Peters, Stefan, 48147 Münster (DE); Fischer, Josef, 88400 Biberach (DE); Wieckhorst, Jan Carsten, 29525 Uelzen Orsteil Hanstedt 2 (DE); Redenius, Jannik, 32361 Pr. Oldendorf (DE); Schröder, Axel, 33332 Gütersloh (DE); Monkenbusch, Robin, 33378 Rheda-Wiedenbrück (DE); Hülsmann, Felix, 33615 Bielefeld (DE); Verploegen, Thijs, 40625 Düsseldorf (DE)
(74) Vertreter: CLAAS Gruppe

(57) **Zusammenfassung**

Die vorliegende Erfindung betrifft ein Planungsportal (1) für einen Landwirt (2) zur Planung und Initiierung eines landwirtschaftlichen Einsatzes einer autonomen landwirtschaftlichen Arbeitsmaschine (3, 4) auf einem landwirtschaftlichen Feld (5).

Die vorliegende Erfindung beruht auf dem allgemeinen Gedanken, dass das Planungsportal (1) dazu vorgesehen und eingerichtet ist, bei der Planung lediglich den Einsatz der Anbaugeräte (8, 9) zuzulassen, die derartige Abmessungen (16, 17) aufweisen, dass das Anbaugerät (8, 9) während des an der autonomen landwirtschaftlichen Arbeitsmaschine (3, 4) gekoppelten Zustandes vollständig innerhalb des erfassbaren Umgebungsbereiches (6, 7) angeordnet ist.

## Beschreibung

Die vorliegende Erfindung betrifft ein Planungsportal für einen Landwirt zur Planung und Initiierung eines landwirtschaftlichen Einsatzes einer autonomen landwirtschaftlichen Arbeitsmaschine auf einem landwirtschaftlichen Feld. Diese autonome landwirtschaftliche Arbeitsmaschine ist dazu vorgesehen und eingerichtet, während des landwirtschaftlichen Einsatzes mittels einem sensorbasierten System einen Umgebungsbereich zu erfassen.

In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass diese Arbeitsmaschinen einen teilautonomen Betriebsmodus und/oder einen vollautonomen Betriebsmodus aufweisen. Während des teilautonomen Betriebsmodus befindet sich zwar ein Bediener in einer Kabine der landwirtschaftlichen Arbeitsmaschine, jedoch ist dieser Bediener nicht mehr in den Steuer- und Regelprozess der jeweiligen landwirtschaftlichen Arbeitsmaschine eingebunden. Hierbei kann die autonome landwirtschaftliche Arbeitsmaschine zwischen dem teilautonomen Betriebsmodus und dem Normalbetrieb, dem manuellen Fahren, wechseln.

Der vollautonome Betriebsmodus kennzeichnet sich dadurch, dass der landwirtschaftlichen Arbeitsmaschine kein Bediener zugeordnet ist. Demnach steht beim vollautonomen Betriebsmodus kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einem landwirtschaftlichen Feld ausführen bzw. beauftragen kann.

Die Planung des landwirtschaftlichen Einsatzes der autonomen landwirtschaftlichen Arbeitsmaschine umfasst wenigstens einen Planungsschritt, bei dem ein Anbaugerät ausgewählt wird, welches während des landwirtschaftlichen Einsatzes an der autonomen landwirtschaftlichen Arbeitsmaschine gekoppelt ist. Die Initiierung eines landwirtschaftlichen Einsatzes erfolgt auf Basis der Planung und umfasst Initiierungssignale, die an die autonome landwirtschaftliche Arbeitsmaschine übermittelt werden. Während des landwirtschaftlichen Einsatzes verwendet die autonome landwirtschaftliche Arbeitsmaschine diese Initiierungssignale zusätzlich zu weiteren Signalen, insbesondere Sensorsignalen, für die Steuerung und/oder Regelung der Arbeitsmaschine und/oder des Anbaugerätes.

Der vorliegenden Erfindung liegt die Aufgabe zugrunde, eine derartige Ausführungsform des Planungsportals des Landwirts anzugeben, welches den sicheren Einsatz der autonomen landwirtschaftlichen Arbeitsmaschine gewährleistet.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass das Planungsportal Informationen, insbesondere in einem computerlesbaren Datenspeicher hinterlegte Informationen, bezüglich des erfassbaren Umgebungsbereiches der autonomen landwirtschaftlichen Arbeitsmaschine und Abmessungs-Informationen bezüglich Abmessungen des Anbaugeräts aufweist, sodass bei der Planung lediglich der Einsatz der Anbaugeräte zugelassen wird, die derartige Abmessungen aufweisen, dass das Anbaugerät während des an der autonomen landwirtschaftlichen Arbeitsmaschine gekoppelten Zustandes vollständig innerhalb des erfassbaren Umgebungsbereiches angeordnet ist.

Hierdurch wird sichergestellt, dass mit der autonomen landwirtschaftlichen Arbeitsmaschine keine Anbaugeräte verwendet werden, die außerhalb des erfassbaren Umgebungsbereiches angeordnet wären und dadurch während des landwirtschaftlichen Einsatzes insbesondere Menschen gefährden würden.

Die autonome landwirtschaftliche Arbeitsmaschine kann einen teilautonomen Betriebsmodus und/oder einen vollautonomen Betriebsmodus während des landwirtschaftlichen Einsatzes einsetzen. Eine autonome landwirtschaftliche Arbeitsmaschine, die einen teilautonomen Betriebsmodus aufweist, kann eine Fahrerkabine umfassen. Eine autonome landwirtschaftliche Arbeitsmaschine, die einen vollautonomen Betriebsmodus aufweist, kann ohne eine Fahrerkabine ausgebildet sein. Eine autonome landwirtschaftliche Arbeitsmaschine, die einen teilautonomen Betriebsmodus und einen vollautonomen Betriebsmodus aufweist, kann eine lösbar koppelbare Fahrerkabine aufweisen.

Die Informationen bezüglich des erfassbaren Umgebungsbereiches der autonomen landwirtschaftlichen Arbeitsmaschine können von der Ausgestaltung der Arbeitsmaschine und/oder Eigenschaften des sensorbasierten Systems abhängen. Dies kann eine messtechnisch erfasste Anordnung des sensorbasierten Systems an der Arbeitsmaschine umfassen. Die Abmessungs-Informationen bezüglich der Abmessungen des Anbaugeräts können messtechnisch erfasste Abmessungswerte des Anbaugeräts sein.

Bei einer vorteilhaften Weiterbildung der erfindungsgemäßen Lösung ist vorgesehen, dass das Planungsportal Informationen bezüglich der erfassbaren Umgebungsbereiche mehrerer autonomer landwirtschaftlicher Arbeitsmaschinen und Abmessungs-Informationen bezüglich Abmessungen mehrerer Anbaugeräte aufweist. Die mehreren autonomen landwirtschaftlichen Arbeitsmaschinen können unterschiedliche Arbeitsmaschinen ausbilden und/oder unterschiedliche Ausgestaltungen aufweisen. Die mehreren Anbaugeräte können unterschiedliche Anbaugeräte ausbilden und/oder unterschiedliche Ausgestaltungen, insbesondere unterschiedliche Abmessungen, aufweisen. Hierdurch kann der Landwirt eine Vielzahl unterschiedlicher autonomer landwirtschaftlicher Arbeitsmaschinen schnell und sicher mit den passenden Anbaugeräten planungstechnisch verknüpfen.

Bei einer vorteilhaften Weiterbildung der erfindungsgemäßen Lösung ist vorgesehen, dass das Planungsportal mit einem Kommunikationsmittel kommunizierend verbunden ist, mit dem der Landwirt das Anbaugerät, welches während des landwirtschaftlichen Einsatzes an der autonomen landwirtschaftlichen Arbeitsmaschine gekoppelt sein wird, planungstechnisch auswählen kann. Das Kommunikationsmittel kann als Smartphone, Tablet, Laptop und/oder Computer ausgebildet sein.

Bei einer vorteilhaften Weiterbildung der erfindungsgemäßen Lösung ist vorgesehen, dass sich die Informationen bezüglich des erfassbaren Umgebungsbereiches auf einen Querumgebungsbereich der autonomen landwirtschaftlichen Arbeitsmaschine beziehen.

Bei einer vorteilhaften Weiterbildung der erfindungsgemäßen Lösung ist vorgesehen, dass sich die Abmessungs-Informationen auf Querabmessungen des Anbaugeräts beziehen. Diese Querabmessungen, insbesondere Querbreite, kann sich auf die Abmessung des Anbaugeräts quer zur Fahrtrichtung, insbesondere quer zur Geradeausfahrtrichtung, der autonomen landwirtschaftlichen Arbeitsmaschine beziehen.

Bei einer vorteilhaften Weiterbildung der erfindungsgemäßen Lösung ist vorgesehen, dass die Informationen bezüglich des erfassbaren Umgebungsbereiches der autonomen landwirtschaftlichen Arbeitsmaschine sich auf eine Abmessung quer zur Fahrtrichtung, insbesondere quer zur Geradeausfahrtrichtung, der autonomen landwirtschaftlichen Arbeitsmaschine beziehen.

Bei einer vorteilhaften Weiterbildung der erfindungsgemäßen Lösung ist vorgesehen, dass sich die Abmessungs-Informationen auf Abmessungen des Anbaugeräts quer zur Fahrtrichtung, insbesondere quer zur Geradeausfahrtrichtung, der autonomen landwirtschaftlichen Arbeitsmaschine beziehen.

Bei einer vorteilhaften Weiterbildung der erfindungsgemäßen Lösung ist vorgesehen, dass sich die Abmessungs-Informationen bezüglich der Abmessungen des Anbaugeräts vorausschauend auf den an der autonomen landwirtschaftlichen Arbeitsmaschine geplanten Kopplungszustand beziehen.

Bei einer vorteilhaften Weiterbildung der erfindungsgemäßen Lösung ist vorgesehen, dass das Planungsportal dazu vorgesehen und eingerichtet ist, im Falle einer unzulässigen Auswahl eines Anbaugerätes ein Hinweissignal zu erzeugen und an das Kommunikationsmittel des Landwirts zu übermitteln, wobei das Kommunikationsmittel den Landwirt gemäß dem Hinweissignal des Planungsportals auf diese unzulässige Auswahl des Anbaugerätes hinweist. Hierdurch kann gesichert werden, dass der Landwirt nicht zufällig ein falsches Anbaugerät auswählt, sondern stets in einem solchen Fall ein sicherheitsrelevantes Feedback erhält und seine Auswahl selbst optimieren kann.

Bei einer vorteilhaften Weiterbildung der erfindungsgemäßen Lösung ist vorgesehen, dass das Planungsportal dazu vorgesehen und eingerichtet ist, im Falle einer unzulässigen Auswahl eines Anbaugerätes ein Vorschlagssignal bezüglich eines zulässigen und/oder optimalen Anbaugerätes zu erzeugen und an das Kommunikationsmittel des Landwirts zu übermitteln, wobei das Kommunikationsmittel den Landwirt gemäß dem Vorschlagssignal des Planungsportals auf das optimale Anbaugerät hinweist. Hierdurch wird der Landwirt bei der richtigen Auswahl des optimalen Anbaugerätes aktiv unterstützt und somit arbeitstechnisch entlastet.

Bei einer vorteilhaften Weiterbildung der erfindungsgemäßen Lösung ist vorgesehen, dass die autonome landwirtschaftliche Arbeitsmaschine als Traktor ausgebildet ist.

Bei einer vorteilhaften Weiterbildung der erfindungsgemäßen Lösung ist vorgesehen, dass die autonome landwirtschaftliche Arbeitsmaschine eine Fahrerkabine für einen Fahrer aufweist.

Bei einer vorteilhaften Weiterbildung der erfindungsgemäßen Lösung ist vorgesehen, dass die Abmessung des Anbaugeräts breiter ist als die Breite der autonomen landwirtschaftlichen Arbeitsmaschine. Somit weist das Anbaugerät eine größere Querbreite auf als der autonome Traktor.

Bei einer vorteilhaften Weiterbildung der erfindungsgemäßen Lösung ist vorgesehen, dass das Planungsportal ein Planungssystem mit einem Server, insbesondere mit einem computerbasierten Server, und einer Datenbank, insbesondere einer computerlesbaren Datenbank, aufweist, wobei in der Datenbank die Informationen bezüglich des erfassbaren Umgebungsbereiches der autonomen landwirtschaftlichen Arbeitsmaschine und Abmessungs-Informationen bezüglich Abmessungen des Anbaugeräts hinterlegt sind.

Ferner betrifft die Erfindung das Kommunikationsmittel, welches dazu vorgesehen und eingerichtet ist, sich mit dem erfindungsgemäßen Planungsportal kommunizierend zu verbinden, um dem Landwirt die Auswahl des Anbaugeräts, welches während eines landwirtschaftlichen Einsatzes an der autonomen landwirtschaftlichen Arbeitsmaschine gekoppelt sein wird, planungs-technisch zu ermöglichen. Dieses Kommunikationsmittel kann als Smartphone, Tablet, Laptop und/oder Computer ausgebildet sein.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

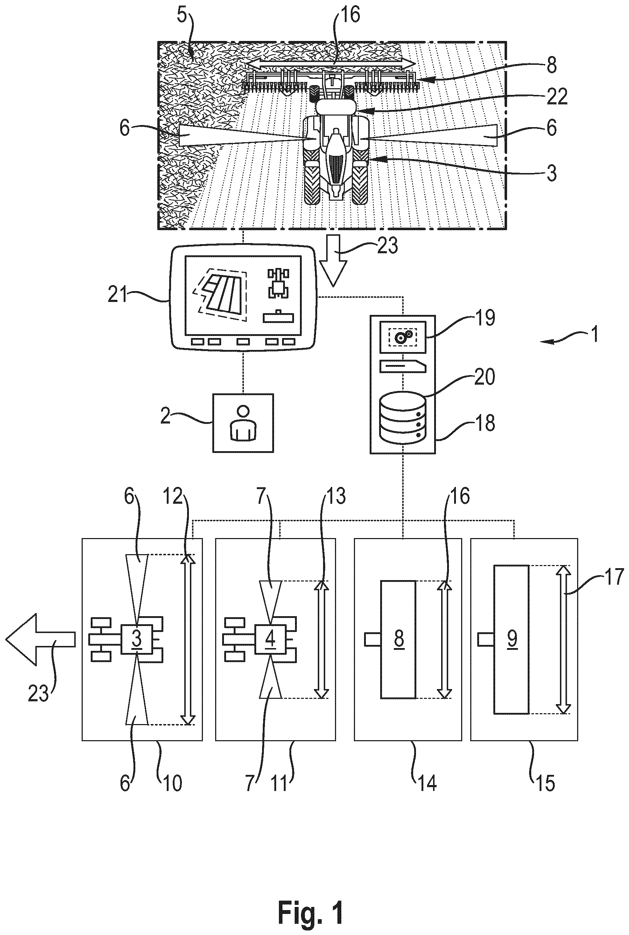

Fig. 1 zeigt ein erfindungsgemäßes Planungsportal 1 für einen Landwirt 2 zur Planung und Initiierung eines landwirtschaftlichen Einsatzes einer autonomen landwirtschaftlichen Arbeitsmaschine 3 auf einem landwirtschaftlichen Feld 5.

Die autonomen landwirtschaftlichen Arbeitsmaschine 3, 4 können einen teilautonomen Betriebsmodus und/oder einen vollautonomen Betriebsmodus während des landwirtschaftlichen Einsatzes einsetzen. Autonome landwirtschaftliche Arbeitsmaschinen 3, 4, die einen teilautonomen Betriebsmodus aufweist, muss eine Fahrerkabine 22 umfassen. Autonome landwirtschaftliche Arbeitsmaschinen 3, 4, die einen vollautonomen Betriebsmodus aufweist, können ohne eine Fahrerkabine 22 ausgebildet sein. Autonome landwirtschaftliche Arbeitsmaschine 3, 4, die einen teilautonomen Betriebsmodus und einen vollautonomen Betriebsmodus aufweisen, kann u.a. eine lösbar koppelbare Fahrerkabine 22 aufweisen.

Die autonome landwirtschaftliche Arbeitsmaschine 3 ist beispielhaft als Traktor mit einer Fahrerkabine 22 ausgebildet, wobei sich während des vollautonomen Betriebsmodus kein Fahrer in dieser Fahrerkabine 22 befinden muss, wohingegen sich während eines teilautonomen Betriebsmodus ein Fahrer in dieser Fahrerkabine 22 befinden muss. Diese autonome landwirtschaftliche Arbeitsmaschine 3 ist dazu eingerichtet, während des landwirtschaftlichen Einsatzes mittels einem sensorbasierten System einen Umgebungsbereich 6 zu erfassen.

Die Planung des landwirtschaftlichen Einsatzes umfasst wenigstens einen Planungsschritt, bei dem ein Anbaugerät 8 ausgewählt wird, welches während des landwirtschaftlichen Einsatzes an der autonomen landwirtschaftlichen Arbeitsmaschine 3 gekoppelt sein wird. Das Planungsportal 1 umfasst Informationen 10, 11 bezüglich der erfassbaren Umgebungsbereiche 6, 7 mehrerer autonomer landwirtschaftlicher Arbeitsmaschinen 3, 4 als auch Abmessungs-Informationen 14, 15 bezüglich Abmessungen 16, 17 mehrerer Anbaugeräte 8, 9.

Das Planungsportal 1 ist derart eingerichtet, dass bei der Planung lediglich der Einsatz der Anbaugeräte 8, 9 zugelassen wird, die derartige Abmessungen 16, 17 aufweisen, dass das Anbaugerät 8, 9 während des an der autonomen landwirtschaftlichen Arbeitsmaschine 3, 4 gekoppelten Zustandes vollständig innerhalb des erfassbaren Umgebungsbereiches 6, 7 angeordnet ist. Hierfür weist das Planungsportal 1 ein Planungssystem 18 mit einem Server 19 und einer Datenbank 20 auf, wobei in dieser Datenbank 20 die Informationen 10, 11 bezüglich des erfassbaren Umgebungsbereiches 6, 7 der autonomen landwirtschaftlichen Arbeitsmaschinen 3, 4 und Abmessungs-Informationen 14, 15 bezüglich Abmessungen 16, 17 der Anbaugeräts 8, 9 hinterlegt sind.

Die Informationen 10, 11 bezüglich des erfassbaren Umgebungsbereiches 6, 7 der autonomen landwirtschaftlichen Arbeitsmaschine 3, 4 können von der Ausgestaltung der Arbeitsmaschine 3, 4 und/oder Eigenschaften des sensorbasierten Systems abhängen. Dies kann eine messtechnisch erfasste Anordnung des sensorbasierten Systems an der Arbeitsmaschine 3, 4 umfassen. Die Abmessungs-Informationen 14, 15 bezüglich der Abmessungen 16, 17 der Anbaugeräte 8, 9 können messtechnisch erfasste Abmessungswerte des jeweiligen Anbaugeräts 8, 9 sein.

Die Informationen 10, 11 bezüglich des erfassbare Umgebungsbereichs 6, 7 der autonomen landwirtschaftlichen Arbeitsmaschinen 3, 4 beziehen sich jeweils auf Abmessungen 12, 13 quer zur Fahrtrichtung 23 der autonomen landwirtschaftlichen Arbeitsmaschine 3, 4 beziehen. Die Abmessungs-Informationen 14, 15 beziehen sich auf Abmessungen 16, 17 des jeweiligen Anbaugeräts 8, 9 quer zur Fahrtrichtung 23 der autonomen landwirtschaftlichen Arbeitsmaschine 3, 4. Beispielsweise kann die autonome landwirtschaftliche Arbeitsmaschine 3 sowohl mit dem Anbaugerät 8 und dem Anbaugerät 9 eingesetzt werden, wohingegen die Arbeitsmaschine 4 lediglich das Anbaugerätes 8 nutzen darf, da die Abmessung 17 des Anbaugeräts 9 größer ist als der erfassbare Umgebungsbereich 7 der autonomen landwirtschaftlichen Arbeitsmaschinen 4.

Das Planungsportal 1 ist mit einem Kommunikationsmittel 21 kommunizierend verbunden, mit dem der Landwirt 2 das Anbaugerät 8 oder 9, welches während des landwirtschaftlichen Einsatzes an der autonomen landwirtschaftlichen Arbeitsmaschine 3 gekoppelt sein wird, planungstechnisch auswählt. Das Kommunikationsmittel 21 kann als Smartphone, Tablet, Laptop und/oder Computer ausgebildet sein.

Das Planungsportal 1 ist dazu vorgesehen, im Falle einer unzulässigen Auswahl eines Anbaugerätes 8, 9 ein Hinweissignal zu erzeugen und an das Kommunikationsmittel 21 des Landwirts 2 zu übermitteln, wobei das Kommunikationsmittel 21 den Landwirt 2 gemäß dem Hinweissignal des Planungsportals 1 auf diese unzulässige Auswahl des Anbaugerätes 8, 9 hinweist. Falls der Landwirt 2 die autonome landwirtschaftliche Arbeitsmaschine 4 und aufgrund hoher Arbeitsbelastung zufälligerweise das Anbaugerät 9 auswählt hat, wird mittels des Hinweissignals frühzeitig und zuverlässig darauf hingewiesen, dass dieses Anbaugerät 9 in keinem Fall eingesetzt werden darf.

Alternativ oder zusätzlich kann das Planungsportal 1 dazu eingerichtet sein, im Falle der unzulässigen Auswahl eines Anbaugerätes 8, 9 ein Vorschlagssignal bezüglich eines zulässigen und/oder optimalen Anbaugerätes 8, 9 zu erzeugen und an das Kommunikationsmittel 21 des Landwirts 2 zu übermitteln, wobei das Kommunikationsmittel 21 den Landwirt 2 gemäß dem Vorschlagssignal des Planungsportals 1 auf das optimale Anbaugerät 8 und/oder 9 hinweist. Falls der Landwirt 2 die autonome landwirtschaftliche Arbeitsmaschine 4 und aufgrund hoher Arbeitsbelastung zufälligerweise das Anbaugerät 9 auswählt hat, wird mittels des Hinweissignals frühzeitig und zuverlässig darauf hingewiesen, dass das Anbaugerät 8 verwendet werden soll.

Die Initiierung eines landwirtschaftlichen Einsatzes erfolgt auf Basis der Planung und umfasst Initiierungssignale, die an die autonome landwirtschaftliche Arbeitsmaschine 3, 4 übermittelt werden. Während des landwirtschaftlichen Einsatzes verwendet die autonome landwirtschaftliche Arbeitsmaschine 3, 4 diese Initiierungssignale zusätzlich zu weiteren Signalen, insbesondere Sensorsignalen, für die Steuerung und/oder Regelung der Arbeitsmaschine 3, 4 und/oder des Anbaugerätes 8, 9.

Hierdurch wird sichergestellt, dass mit der autonomen landwirtschaftlichen Arbeitsmaschine 3, 4 keine Anbaugeräte 8, 9 eingesetzt werden, die außerhalb des erfassbaren Umgebungsbereiches 6, 7 angeordnet wären und dadurch während des landwirtschaftlichen Einsatzes insbesondere Menschen gefährden würden.

### Bezugszeichenliste

- 1: Planungsportal
- 2: Landwirt
- 3: autonome landwirtschaftliche Arbeitsmaschine
- 4: weitere autonome landwirtschaftliche Arbeitsmaschine
- 5: landwirtschaftliches Feld
- 6: Umgebungsbereich
- 7: Umgebungsbereich der weiteren Arbeitsmaschine
- 8: Anbaugerät
- 9: weiteres Anbaugerät
- 10: Informationen bezüglich der Arbeitsmaschine
- 11: Informationen bezüglich der weiteren Arbeitsmaschine
- 12: Abmessung des erfassbaren Umgebungsbereiches der Arbeitsmaschine
- 13: Abmessung des erfassbaren Umgebungsbereiches der weiteren Arbeitsmaschine
- 14: Abmessungs-Informationen des Anbaugeräts
- 15: Abmessungs-Informationen des weiteren Anbaugerät
- 16: Abmessung des Anbaugeräts
- 17: Abmessung des weiteren Anbaugerät
- 18: Planungssystem
- 19: Server
- 20: Datenbank
- 21: Kommunikationsmittel
- 22: Fahrerkabine
- 23: Fahrtrichtung, insbesondere Geradeausfahrtrichtung

## Patentansprüche

1. Planungsportal (1) für einen Landwirt (2) zur Planung und Initiierung eines landwirtschaftlichen Einsatzes einer autonomen landwirtschaftlichen Arbeitsmaschine (3, 4) auf einem landwirtschaftlichen Feld (5), wobei diese autonome landwirtschaftliche Arbeitsmaschine (3, 4) dazu vorgesehen und eingerichtet ist, während des landwirtschaftlichen Einsatzes mittels einem sensorbasierten System einen Umgebungsbereich (6, 7) zu erfassen, wobei die Planung des landwirtschaftlichen Einsatzes wenigstens einen Planungsschritt umfasst, bei dem ein Anbaugerät (8, 9) ausgewählt wird, welches während des landwirtschaftlichen Einsatzes an der autonomen landwirtschaftlichen Arbeitsmaschine (3, 4) gekoppelt sein wird,
**dadurch gekennzeichnet,**
- **dass** das Planungsportal (1) Informationen (10, 11) bezüglich des erfassbaren Umgebungsbereiches (6, 7) der autonomen landwirtschaftlichen Arbeitsmaschine (3, 4) und Abmessungs-Informationen (14, 15) bezüglich Abmessungen (16, 17) des Anbaugeräts (8, 9) aufweist,
- wobei das Planungsportal (1) dazu vorgesehen und eingerichtet ist, bei der Planung lediglich den Einsatz der Anbaugeräte (8, 9) zuzulassen, die derartige Abmessungen (16, 17) aufweisen, dass das Anbaugerät (8, 9) während des an der autonomen landwirtschaftlichen Arbeitsmaschine (3, 4) gekoppelten Zustandes vollständig innerhalb des erfassbaren Umgebungsbereiches (6, 7) angeordnet ist.

2. Planungsportal (1) nach Anspruch 1,
**dadurch gekennzeichnet,**
**dass** das Planungsportal (1) Informationen (10, 11) bezüglich der erfassbaren Umgebungsbereiche (6, 7) mehrerer autonomer landwirtschaftlicher Arbeitsmaschinen (3, 4) und Abmessungs-Informationen (14, 15) bezüglich Abmessungen (16, 17) mehrerer Anbaugeräte (8, 9) aufweist.

3. Planungsportal (1) nach einem der vorhergehenden Ansprüche,
**dadurch gekennzeichnet,**
**dass** das Planungsportal (1) mit einem Kommunikationsmittel (21) kommunizierend verbunden ist, mit dem der Landwirt (2) das Anbaugerät (8, 9), welches während des landwirtschaftlichen Einsatzes an der autonomen landwirtschaftlichen Arbeitsmaschine (3, 4) gekoppelt sein wird, planungstechnisch auswählen kann.

4. Planungsportal (1) nach einem der vorhergehenden Ansprüche,
**dadurch gekennzeichnet,**
**dass** sich die Informationen (10, 11) bezüglich des erfassbaren Umgebungsbereiches (6, 7) auf einen Querumgebungsbereich der autonomen landwirtschaftlichen Arbeitsmaschine (3, 4) beziehen.

5. Planungsportal (1) nach einem der vorhergehenden Ansprüche,
**dadurch gekennzeichnet,**
**dass** sich die Abmessungs-Informationen (14, 15) auf Querabmessungen (16, 17) des Anbaugeräts (8, 9) beziehen.

6. Planungsportal (1) nach einem der vorhergehenden Ansprüche,
**dadurch gekennzeichnet,**
**dass** die Informationen (10, 11) bezüglich des erfassbaren Umgebungsbereiches (6, 7) der autonomen landwirtschaftlichen Arbeitsmaschine (3, 4) sich auf eine Abmessung (12, 13) quer zur Fahrtrichtung (23) der autonomen landwirtschaftlichen Arbeitsmaschine (3, 4) beziehen.

7. Planungsportal (1) nach einem der vorhergehenden Ansprüche,
**dadurch gekennzeichnet,**
**dass** sich die Abmessungs-Informationen (14, 15) auf Abmessungen (16, 17) des Anbaugeräts (8, 9) quer zur Fahrtrichtung (23) der autonomen landwirtschaftlichen Arbeitsmaschine (3, 4) beziehen.

8. Planungsportal (1) nach einem der vorhergehenden Ansprüche,
**dadurch gekennzeichnet,**
**dass** sich die Abmessungs-Informationen (14, 15) bezüglich der Abmessungen (16, 17) des Anbaugeräts (8, 9) vorausschauend auf den an der autonomen landwirtschaftlichen Arbeitsmaschine (3, 4) geplanten Kopplungszustand beziehen.

9. Planungsportal (1) nach einem der Ansprüche 3 bis 8,
**dadurch gekennzeichnet,**
- **dass** das Planungsportal (1) dazu vorgesehen und eingerichtet ist, im Falle einer unzulässigen Auswahl eines Anbaugerätes (8, 9) ein Hinweissignal zu erzeugen und an das Kommunikationsmittel (21) des Landwirts (2) zu übermitteln,
- wobei das Kommunikationsmittel (21) den Landwirt (2) gemäß dem Hinweissignal des Planungsportals (1) auf diese unzulässige Auswahl des Anbaugerätes (8, 9) hinweist.

10. Planungsportal (1) nach einem der Ansprüche 3 bis 9,
**dadurch gekennzeichnet,**
- wobei das Planungsportal (1) dazu vorgesehen und eingerichtet ist, im Falle einer unzulässigen Auswahl eines Anbaugerätes (8, 9) ein Vorschlagssignal bezüglich eines zulässigen und/oder optimalen Anbaugerätes (8, 9) zu erzeugen und an das Kommunikationsmittel (21) des Landwirts (2) zu übermitteln,
- wobei das Kommunikationsmittel (21) den Landwirt (2) gemäß dem Vorschlagssignal des Planungsportals (1) auf das optimale Anbaugerät (8, 9) hinweist.

11. Planungsportal (1) nach einem der vorhergehenden Ansprüche,
**dadurch gekennzeichnet,**
**dass** die autonome landwirtschaftliche Arbeitsmaschine (3, 4) als Traktor ausgebildet ist.

12. Planungsportal (1) nach einem der vorhergehenden Ansprüche,
**dadurch gekennzeichnet,**
**dass** die autonome landwirtschaftliche Arbeitsmaschine (3, 4) eine Fahrerkabine (22) aufweist.

13. Planungsportal (1) nach einem der vorhergehenden Ansprüche,
**dadurch gekennzeichnet,**
**dass** die Abmessung (16, 17) des Anbaugeräts (8, 9) breiter ist eine Breite der autonomen landwirtschaftlichen Arbeitsmaschine (3, 4).

14. Planungsportal (1) nach einem der vorhergehenden Ansprüche,
**dadurch gekennzeichnet,**
- **dass** das Planungsportal (1) ein Planungssystem (18) mit einem Server (19) und einer Datenbank (20) aufweist,
- wobei in der Datenbank (20) die Informationen (10, 11) bezüglich des erfassbaren Umgebungsbereiches (6, 7) der autonomen landwirtschaftlichen Arbeitsmaschine (3, 4) und Abmessungs-Informationen (14, 15) bezüglich Abmessungen (16, 17) des Anbaugeräts (8, 9) hinterlegt sind.

15. Kommunikationsmittel (21), welches dazu vorgesehen und eingerichtet ist, sich mit dem Planungsportal (1) nach einem der vorhergehenden Ansprüche kommunizierend zu verbinden, um einen Landwirt (2) eine Auswahl eines Anbaugeräts (8, 9), welches während eines landwirtschaftlichen Einsatzes an der autonomen landwirtschaftlichen Arbeitsmaschine (3, 4) gekoppelt sein wird, planungs-technisch zu ermöglichen.
